# EUROPÄISCHE PATENTSCHRIFT

(11) **EP 1 861 910 B1**
(45) Veröffentlichungstag und Bekanntmachung des Hinweises auf die Patenterteilung: **11.07.2012**
(21) Anmeldenummer: 06725232.0
(22) Anmeldetag: 22.03.2006
(51) Int. Cl.: H02J 7/00

(54) **VORRICHTUNG UND VERFAHREN ZUM LADUNGSAUSGLEICH VON IN REIHE ANGEORDNETEN EINZELNEN ZELLEN EINES ENERGIESPEICHERS**
DEVICE AND METHOD FOR EQUALIZING CHARGE OF SERIES-CONNECTED INDIVIDUAL CELLS OF AN ENERGY ACCUMULATOR
DISPOSITIF ET PROCEDE POUR L'EQUILIBRAGE DE CHARGE DE CELLULES INDIVIDUELLES DISPOSEES EN RANGEE D'UN ACCUMULATEUR D'ENERGIE

(30) Priorität: 24.03.2005 DE 102005014285
(43) Veröffentlichungstag der Anmeldung: 05.12.2007
(73) Patentinhaber: Continental Automotive GmbH, 30165 Hannover (DE)
(72) Erfinder: BOLZ, Stephan, 93102 Pfatter (DE); GÖTZENBERGER, Martin, 85051 Ingolstadt (DE); KNORR, Rainer, 93055 Regensburg (DE)
(86) Internationale Anmeldenummer: PCT/EP2006/060949
(87) Internationale Veröffentlichungsnummer: WO 2006/100264

(56) Entgegenhaltungen:
- EP-A- 1 020 973
- EP-A- 1 296 435
- EP-A2- 0 769 837
- DE-A1- 4 426 017
- DE-A1- 10 312 362
- US-A- 4 331 911
- US-A- 5 659 237
- US-A1- 2003 038 612
- KUTKUT N H ET AL: "Charge equalization for series connected battery strings" INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2. Oktober 1994 (1994-10-02), Seiten 1008-1015, XP010124134 ISBN: 0-7803-1993-1
- KUTKUT N H ET AL: "Dynamic equalization techniques for series battery stacks" TELECOMMUNICATIONS ENERGY CONFERENCE, 1996. INTELEC '96., 18TH INTERNATIONAL BOSTON, MA, USA 6-10 OCT. 1996, NEW YORK, NY, USA,IEEE, US, 6. Oktober 1996 (1996-10-06), Seiten 514-521, XP010204362 ISBN: 0-7803-3507-4

## Beschreibung

Die Erfindung betrifft eine Vorrichtung und ein Verfahren zum Ladungsausgleich von in Reihe angeordneten einzelnen Zellen eines Energiespeichers, insbesondere von in Reihe geschalteten Kondensatoren eines Doppelschichtkondensators, wie sie beispielsweise bei einem Kraftfahrzeug-Bordnetz Verwendung finden.

Doppelschichtkondensatoren haben sich als sinnvollste technische Lösung zur Speicherung und Bereitstellung kurzfristig hoher Leistungen in einem Kraftfahrzeug-Bordnetz erwiesen, beispielsweise bei der Beschleunigungsunterstützung (Boosten) der Brennkraftmaschine durch einen als Elektromotor arbeitenden integrierten Starter-Generator oder bei der Umwandlung von Bewegungsenergie in elektrische Energie durch den als Generator arbeitenden integrierten Starter-Generator beim regenerativen Bremsvorgang (Rekuperation).

Die maximale Spannung einer Einzelzelle eines Doppelschichtkondensators ist auf etwa 2,5V bis 3,0V begrenzt, so dass für eine Spannung von beispielsweise 60V - ein typischer Spannungswert für einen in einem 42V-Bordnetz verwendeten Doppelschichtkondensator - etwa 20 bis 26 Einzelkondensatoren zu einem Kondensatorstapel in Reihe geschaltet werden müssen.

Bedingt durch unterschiedliche Selbstentladung der Einzelzellen baut sich im Lauf der Zeit ein Ladungsungleichgewicht im Kondensatorstapel auf, welches den Doppelschichtkondensator letztendlich unbrauchbar macht, wenn kein Ladungsausgleich vorgenommen wird.

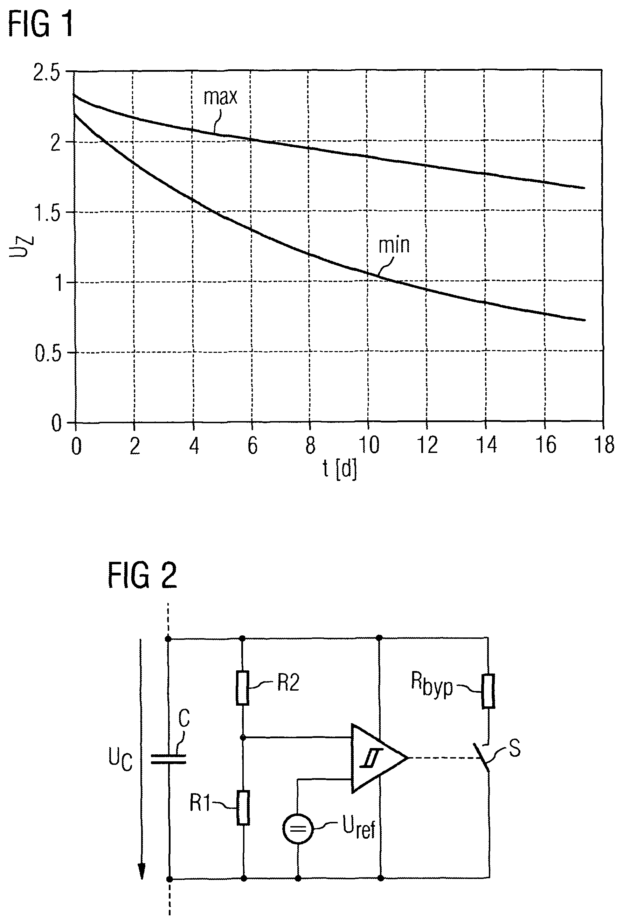

Extrapoliert man die Entladekurve auf Zeiträume von Wochen bis Monate, die beim Kraftfahrzeug relevant sind, so wird das bestehende Problem offensichtlich. Figur 1 zeigt beispielhaft den Streubereich der Kondensatorspannungen für einen Doppelschichtkondensator (Kondensatorstapel) mit 18 Zellen (Kondensatoren) über der Zeit. Die in Figur 1 dargestellte Streubreite (zwischen Maximum und Minimum) zeigt, wie weit die Selbstentladung der Einzelzellen innerhalb eines Kondensatorstapels mit der Zeit schwanken kann.

Ein einfacher Ladungsausgleich, beispielsweise durch geringes Überladen des Kondensatorstapels, wie bei einem Blei-Säure-Akkumulator, ist bei einem Doppelschichtkondensator jedoch nicht möglich.

Eine firmenintern bekannte Möglichkeit besteht darin, die Spannung jeder Einzelzelle mittels separater Elektronik (Operationsverstärker und Spannungsteiler R1/R2) zu überwachen und bei Erreichen oder Überschreiten eines vorgegebenen Maximalwertes U_{ref} eine Teilentladung mittels eines anschaltbaren Parallelwiderstandes R_{byp} herbeizuführen (Figur 2). Die Zelle entlädt sich dann über den Parallelwiderstand R_{byp} und ihre Spannung U_{C} sinkt wieder unter den Maximalwert. Wird der Maximalwert um einen vorbestimmten Spannungswert unterschritten, so wird der Parallelwiderstand R_{byp} wieder abgeschaltet.

Solch eine Schaltung verbraucht im passiven Zustand wenig Energie, jedoch wird der Ladungsausgleich durch Ladungsabbau (Energieverlust im Parallelwiderstand R_{byp}) erzielt. Diese Variante ist sinnvoll dort einzusetzen, wo ein Kondensatorstapel überwiegend nahe der Maximalspannung betrieben wird, etwa bei der Versorgung von Notstromanlagen.

Das Konzept ist jedoch darauf beschränkt, dass der Ladestrom in den Kondensatorstapel hinein kleiner sein muss als der Entladestrom der Ladungsausgleichschaltung, da sonst trotzdem eine Überladung von einzelnen Kondensatoren beim Aufladen des Moduls nicht zu verhindern ist. Zudem kann das Ausgleichsystem nicht von extern eingeschaltet werden, sondern nur durch Überschreiten der vorbestimmten Spannungsschwelle aktiviert werden. Bei dem Betrieb in einem Kraftfahrzeug wird jedoch genau dieser Zustand nicht über eine längere Zeit erreicht. Ein so gestalteter Ladungsausgleich führt langfristig zu einer Unsymmetrie im Kondensatorstapel. Dies konnte bereits durch Messungen in einem Versuchsfahrzeug nachgewiesen werden.

Zusammengefasst hat eine solche Schaltungsanordnung folgende Nachteile:
- keine Rückmeldung an eine übergeordnete Betriebsführung, wenn eine Zelle die maximale Spannung überschritten hat (beispielsweise U_{C}>2,5V),
- keine Rückmeldung, ob die Zellenspannungen gleich groß sind und daher der Kondensatorstapel ausgeglichen ist,
- der Ausgleich wird nur aktiviert, wenn die maximale Spannung überschritten wird,
- Energie wird während des Ausgleichsvorganges von Widerständen in Wärme umgewandelt,
- bei hohen Strömen von bis zu ca. 1kA, wie sie bei der oben beschriebenen Fahrzeugfunktionen Rekuperation (Regeneratives Bremsen) auftreten, ist ein derartig aufgebauter Ladungsausgleich ausgeschlossen.

Aus EP 0 432 639 B2 ist bekannt, bei einer Vielzahl von in Reihe geschalteten Akkumulatoren einen Ladungsausgleich zwischen einem schwach geladenen Akkumulator und der Gruppe der übrigen Akkumulatoren herbeizuführen, indem für jeden Einzelakkumulator des Akkumulatorstapels eine Vergleichsschaltung und eine Ladeschaltung (welche einen Rechteck-Funktionsgenerator aufweist) sowie eine Diode, ein Transformator und ein Unterbrecher vorgesehen sind.

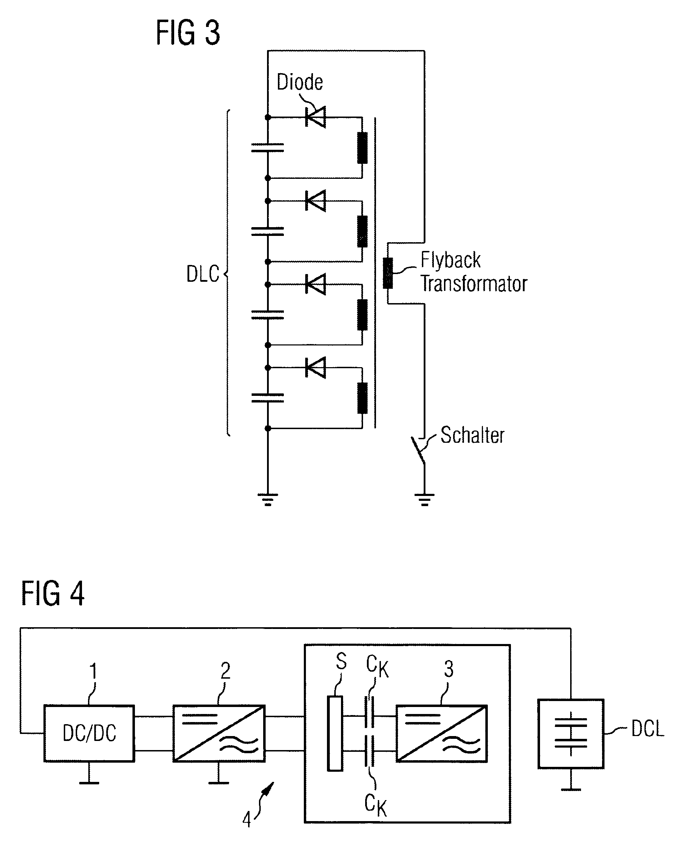

Mittels einer solchen, als Flyback-Konverter nach dem Sperrwandlerprinzip arbeitenden Vorrichtung (Figur 3) wird dem gesamten Stapel Energie entnommen und diese anschließend in den am meisten entladenen Akkumulator zurückgespeist.

Dieser Aufwand mag für zwei oder drei Akkumulatoren gerechtfertigt sein, für einen Stapel aus zwanzig oder mehr Akkumulatoren/Kondensatorzellen ist er entschieden zu hoch.

Alternativ kann hier auch eine andere Energiequelle - etwa eine zusätzliche Batterie - genutzt werden, wodurch die Schaltung zusätzlich zum langsamen Aufladen des Kondensatorstapels dienen kann - siehe auch DE 102 56 704 B3.

Diese Form des Ladungsausgleichs kann zudem unabhängig vom Erreichen einer maximalen Spannung des Einzelkondensators jederzeit durchgeführt werden, so dass sich ein gefährliches Ladungsungleichgewicht im Kondensatorstapel gar nicht erst aufbauen kann.

Es werden dabei nur Ladungen verschoben. Es wird dem Stapel langfristig keine Energie entnommen oder in Wärme umgesetzt. Dies macht das Konzept für Kraftfahrzeug-Anwendungen besonders attraktiv, da auch nach längerem Fahrzeugstillstand genügend Energie im Bordnetz vorhanden sein muss, um einen erfolgreichen Motorstart sicher zu gewährleisten.

Nachteilig bei dieser Ausführung ist allerdings, dass die Sekundärseite des Flyback-Transformators sehr viele Anschlüsse benötigt. Bei einem Kondensatorstapel mit beispielsweise 25 Einzelzellen, wie er für das 42V-Bordnetz benötigt wird, ergeben sich daraus 50 Anschlüsse. In der technischen Realisierung würde dies einen speziellen Wickelkörper erforderlich machen, der handelsüblich nicht verfügbar ist. Zudem bedarf jede Änderung der Zellenzahl im Stapel einer Anpassung des Transformators. Dies ist aber zu erwarten, da mit der technischen Weiterentwicklung des Doppelschichtkondensators die zulässige Maximalspannung von Generation zu Generation steigt und bei gegebener Modulspannung entsprechend weniger Einzelkondensatoren benötigt werden.

Auch ist die Leitungsführung vom Transformator zu den Kondensatorzellen aufwendig, da jeder Kontakt im Stapel separat verbunden werden muss. Im obigen Beispiel ergibt dies 26 Leitungen, sofern die Gleichrichterdioden am Transformator angeordnet sind; andernfalls sind es 50 Leitungen. Darüber hinaus sind diese Leitungen mit hochfrequenten Spannungspulsen aus den Schaltvorgängen des Flyback-Converters belastet und benötigen gesonderte EMV-Entstörmaßnahmen.

Ein weiterer Aspekt ist die Methode zum Betrieb des Flyback-Konverters. Marktübliche Ansteuerschaltungen (Schaltregler-ICs) arbeiten fast ausschließlich mit einer festen Schaltfrequenz. Die Aufladung des Magnetspeichers (Speicherinduktivität oder -transformator) erfolgt in der einen Phase, die Entladung, bzw. Energieübertragung in den Ausgangskreis erfolgt in der anderen Phase des Taktes. Dies ist vor allem sinnvoll, wenn neben dem geschalteten Strom auch ein Gleichstromanteil mit übertragen wird (nichtlückender Betrieb). Ganz generell versucht man, eine Schaltlücke - also den Zeitraum, in welchem das magnetische Speicherelement völlig entladen bleibt - zu vermeiden, da dann verstärkt Oszillationsneigungen auftreten und die Speichereigenschaften des Magnetkernes nicht optimal genutzt werden. Die Oszillationen sind in dem Resonanzkreis begründet, der aus Speicherinduktivität und Wicklungskapazität besteht, sowie der Tatsache, dass der Resonanzkreis anfangs der Schaltlücke angeregt ist und durch keine ohmsche Last bedämpft wird.

Im vorliegenden Anwendungsfall ist ein nichtlückender Betrieb jedoch nicht möglich, da bei kontinuierlichem Nachladen des Magnetspeichers jeweils vor dessen vollständiger Entladung eine Sättigung des Kernmaterials nicht zu vermeiden ist. Die US 5659237 offenbart eine Vorrichtung zum Ladungsausgleich von in Reihe angeordneten einzelnen Zellen eines Energiespeichers.

Es ist Aufgabe der Erfindung, eine Vorrichtung mit einem vereinfachten Aufbau zu schaffen, mittels welcher ein gesteuerter Betrieb zum Ladungsausgleich zwischen den einzelnen in Serie geschalteten Zellen mit geringem technischem Aufwand erreicht werden kann.

Aufgabe der Erfindung ist es auch, ein Verfahren zum Betreiben dieser Vorrichtung zu schaffen.

Diese Aufgabe wird erfindungsgemäß durch eine Vorrichtung gemäß den Merkmalen von Anspruch 1 und ein Verfahren zum Betreiben dieser Vorrichtung gemäß den Merkmalen von Anspruch 9 gelöst.

Bei zumindest zwei in Reihe geschalteten Energiespeichern (Zellen) wird die zum Ausgleich der gespeicherten Ladungen benötigte Energie über einen Wechselspannungsbus (AC-Bus) zugeführt, wobei zwischen dem AC-Bus und jeder Zelle ein Auswahlschalter angeordnet ist, wodurch die Zellen mit dem AC-Bus elektrisch verbunden oder elektrisch von diesem getrennt werden können.

Vorteilhafte Weiterbildungen der Erfindung sind den Unteransprüchen zu entnehmen.

Die Anbindung und Potentialtrennung der Zellen erfolgt über Kondensatoren oder Transformatoren.

Die Auswahlschalter sind vorzugsweise als Transistoren, insbesondere als MOSFET-Transistoren ausgebildet. Diese Transistoren werden von einer Ansteuereinheit angesteuert. Diese Ansteuerung erfolgt vorzugsweise in Abhängigkeit von zumindest einem Betriebsparameter der Zellen, wie beispielsweise der Kapazität oder des Innenwiderstands.

Die Installation ist durch das Bussystem einfach durchführbar. Die einzelnen Zellen werden über eine oder zwei AC-Busleitungen versorgt. Es werden für die Schaltung nur wenige und preiswerte Komponenten benötigt. Bei diesen handelt es sich im Wesentlichen um Standardkomponenten.

Der Ausgleichsvorgang kann jederzeit aktiviert werden. Diese Aktivierung kann beispielsweise durch ein Steuergerät erfolgen, das den Aktivierungszeitpunkt aufgrund von Betriebsparametern eines Kraftfahrzeugs, insbesondere einer Brennkraftmaschine und/oder eines Starter-Generators, bestimmt. Über die Ausgleichsschaltung kann ein Nachladen des Kondensatorstapels erfolgen. Auf diese Weise kann eine Serienschaltung leerer Zellen aus einer weiteren Energiequelle wieder aufgeladen werden und so beispielsweise ein Kraftfahrzeug, das längere Zeit stillstand, wieder startfähig gemacht werden.

Das Gesamtsystem ist einfach zu erweitern und dadurch leicht skalierbar.

Die Schaltungsanordnung eignet sich in besonderer Weise für eine Integration in den Stapel von in Reihe geschalteten Zellen eines Energiespeichers und/oder in das Gehäuse der einzelnen Zellen oder des gesamten Energiespeichers.

Als Energiespeicher eignen sich hier insbesondere Doppelschichtkondensatoren, auch Super- oder Ultra-Caps genannt.

Ausführungsbeispiele nach der Erfindung werden nachstehend anhand einer schematischen Zeichnung näher erläutert. In der Zeichnung zeigen:
- Figur 1: die Streuung der Kondensatorspannungen verschiedener Zellen eines Doppelschichtkondensators über der Zeit,
- Figur 2: eine bekannte Schaltungsanordnung zum Erzielen eines Ladungsausgleichs bei Energiespeichern,
- Figur 3: eine weitere bekannte Schaltungsanordnung zum Erzielen eines Ladungsausgleichs bei Energiespeichern,
- Figur 4: ein Blockschaltbild einer erfindungsgemäßen Ladungsausgleichsschaltung,
- Figur 5: ein Ausführungsbeispiel einer Ladungsausgleichsschaltung,
- Figur 6: ein weiteres Ausführungsbeispiel einer Ladungsausgleichsschaltung mit induktiven Koppelelementen,

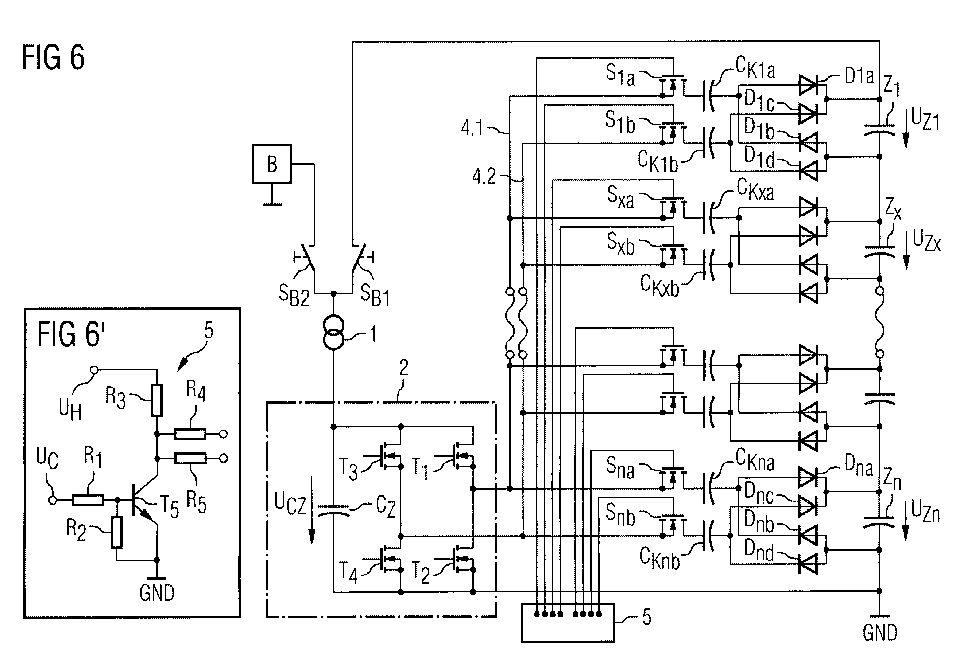

- Figur 6': ein Ausführungsbeispiel einer Ansteuereinheit mit kapazitiven Koppelelementen, und

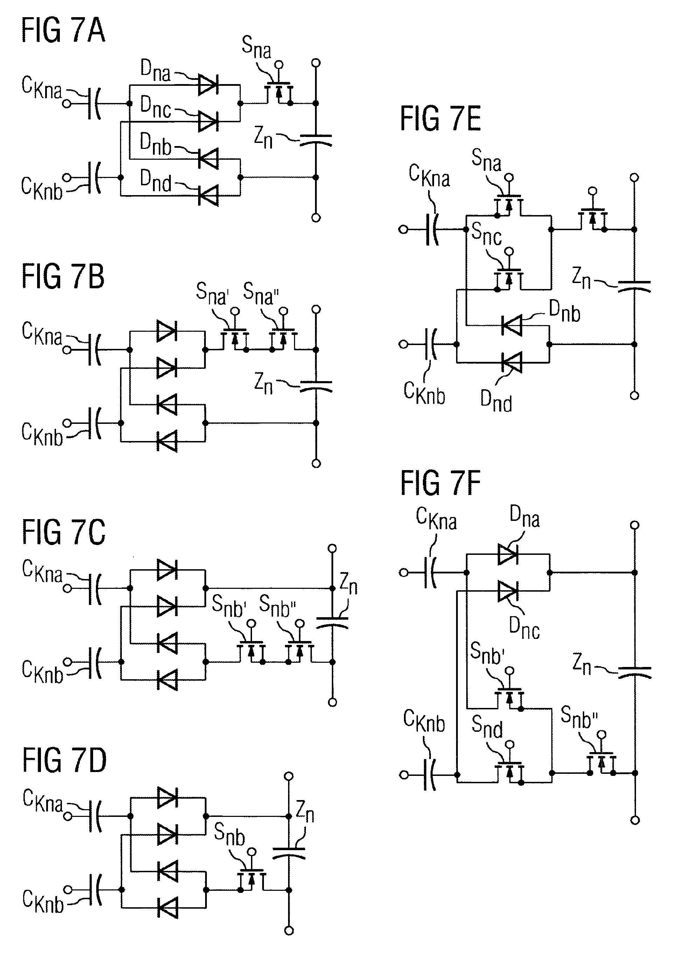

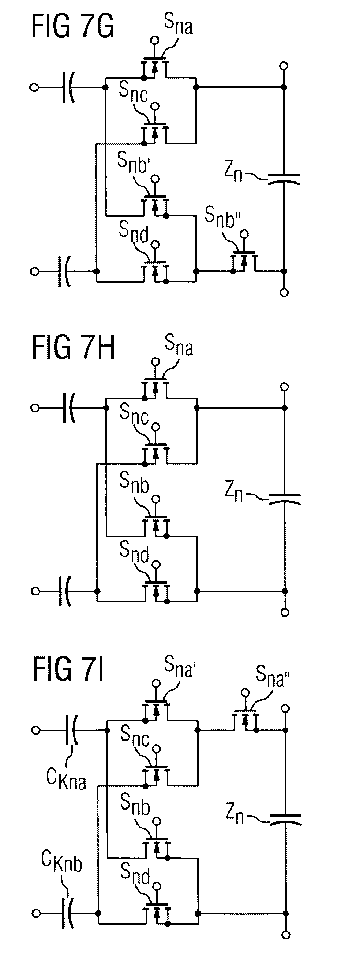

- Figur 7: weitere Ausführungsbeispiele einer Ladungsausgleichsschaltung.

Die Figuren 1 bis 3 sind bereits weiter oben erläutert worden.

Ein Blockschaltbild einer prinzipiellen Schaltung zum Ladungsausgleich von Zellen eines Energiespeichers nach der Erfindung ist in Figur 4 dargestellt. Durch einen ersten Wandler 1 wird eine Gleichspannung erzeugt. Diese Gleichspannung wird über einen zweiten Wandler 2 mit einer Pulsfrequenz von beispielsweise 50kHz wechselgerichtet und mit dieser Wechselspannung ein AC-Bus 4 beaufschlagt. Als Bus wird hier ein System von Leitern (Kabeln, Kupferschienen, etc.) bezeichnet.

An diesen Bus 4 sind über jeweils einen Auswahlschalter S und ein Koppelelement, hier einen Koppelkondensator C_{K} und einen Gleichrichter 3 die in Reihe geschalteten Zellen Z₁ bis Zₙ des Doppelschichtkondensators DLC angeschlossen. Die Koppelkondensatoren C_{K} werden zur Potentialtrennung eingesetzt und durch die Wechselspannung teilweise umgeladen.

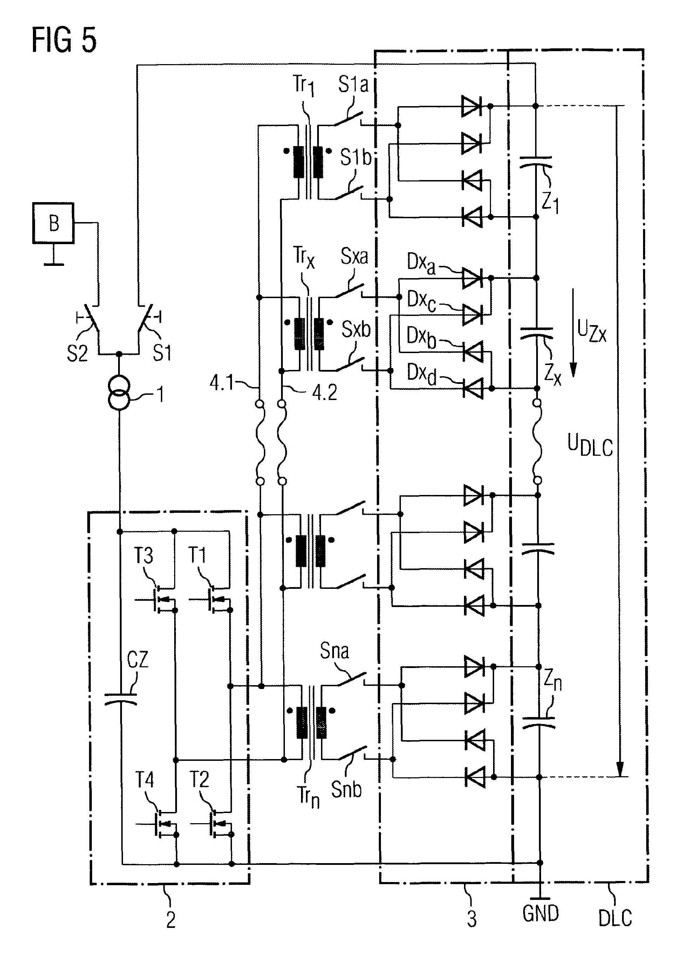

Figur 5 zeigt ein erstes Ausführungsbeispiel einer erfindungsgemäßen Schaltungsanordnung zum Ladungsausgleich von Zellen Z₁ bis Zₙ eines Doppelschichtkondensators DLC. Die über der Reihenschaltung der einzelnen Zellen Z₁ bis Zₙ des Doppelschichtkondensators DLC abfallende Spannung U_{DLC} wird einem DC/DC-Spannungswandler 1 - beispielsweise einem stromgeregelten Tiefsetzsteller - über einen ersten Schalter SB1 zugeführt. Über einen zweiten Schalter SB2 kann zusätzlich oder alternativ eine Energiequelle, beispielsweise ein Akkumulator B, mit dem DC/DC-Spannungswandler 1 verbunden werden.

Der DC/DC-Wandler 1 ist mit dem Eingang eines DC/AC-Wandlers 2 elektrisch verbunden, welcher einen Zwischenkreiskondensator C_{Z} und eine Vollbrückenschaltung mit zwei Halbbrücken aufweist, bestehend aus erstem und zweitem Transistor T1-T2 bzw. drittem und viertem Transistor T3-T4, deren Ausgänge, die Verbindungspunkte der Transistoren T1-T2 bzw. T3-T4, mit je einer Bus-Leitung 4.1, 4.2 verbunden sind. Jede Busleitung wird über die ihr zugeordnete Halbbrücke mit Energie versorgt.

Jeder Zelle Z₁ bis Zₙ ist
a) ein Koppeltransformator Tr₁ bis Trₙ zugeordnet, dessen Primärwicklung zwischen den beiden Busleitungen 4.1 und 4.2 liegt, und
b) eine Reihenschaltung eines Auswahlschalters S₁ₐ bis Sₙₐ und S_{1b}, bis S_{nb} und einer Gleichrichterschaltung 3 zugeordnet, welche zwischen der Sekundärwicklung des zugeordneten Koppeltransformators und der Zelle selbst liegt.

Beispielhaft für eine Zelle Zₓ (x = 1 bis n) bedeutet dies:
der erste Anschluss der Sekundärwicklung des Koppeltransformators Trₓ ist über einen Auswahlschalter Sₓₐ und eine zur Zelle Zₓ hin stromleitende Diode Dₓₐ mit dem positiven Anschluss der Zelle Zₓ verbunden und über den Auswahlschalter Sₓₐ und über eine von der Zelle weg stromleitende Diode D_{xb} mit dem negativen Anschluss der Zelle Zₓ verbunden und
der zweite Anschluss der Sekundärwicklung des Koppeltransformators Trₓ ist über einen Auswahlschalter S_{xb} und eine zur Zelle Zₓ hin stromleitende Diode D_{xc} mit dem positiven Anschluss der Zelle Zₓ verbunden und über den Auswahlschalter S_{xb} und eine von der Zelle weg stromleitende Diode D_{xd} mit dem negativen Anschluss der Zelle Zₓ verbunden.

Die vier Gleichrichterdioden Dₓₐ bis D_{xd} bilden also jeweils einen Grätz-Gleichrichter.

Der DC/AC-Wandler 2 arbeitet mit einer Pulsfrequenz von beispielsweise 50kHz. Da anschließend Koppeltransformatoren eingesetzt sind, die in ihrer Aussteuerbarkeit begrenzt sind, ist auf ein gleichspannungsfreies Signal auf dem AC-Bus zu achten.

Bei Ansteuerung der AC-Busleitungen 4.1 und 4.2 erscheint auf der Sekundärseite der Koppeltransformatoren eine Wechselspannung. Erreicht diese Wechselspannung die Summe aus Zellenspannung U_{zx} derjenigen Zelle Zₓ deren Ansteuerschalter Sₓₐ und S_{xb} geschlossen sind und die in der ausgewählten Gruppe die geringste Zellenspannung plus zweier Diodenflussspannungen aufweist, so wird sie mittels der nachfolgenden Gleichrichterschaltung 3 zu einer pulsierenden Gleichspannung gleichgerichtet und führt an dieser Zelle zu einem Stromfluss. Alle anderen Zellen werden, je nach Ansteuerungszustand der Auswahlschalter Sₓₐ und S_{xb} und ihrer Zellenspannung, davon nicht oder, je nach Zellenspannung U_{zx}, nur minimal beeinflusst.

Die Energie, mit der die Zelle Zₓ, welche mit dem AC-Bus verbunden ist und in dieser Gruppe die geringste Zellenspannung U_{ZX} aufweist, geladen wird, kommt aus dem Zwischenkreiskondensator C_{Z}, der sich durch diese Belastung einerseits und durch die konstante Nachladung andererseits auf die erforderliche Spannung selbsttätig einstellt.

Transformatoren mit geringer Streuung und Dioden mit geringer Durchlassspannung erweisen sich als besonders geeignet.

Die beiden mit einem Rechtecksignal angesteuerten Halbbrücken des DC/AC-Wandlers 2 arbeiten gegenphasig, d.h., wenn die Transistoren T1 und T4 in der ersten Phase stromleitend sind, sind die Transistoren T2 und T3 nicht leitend; in der zweiten Phase ist es umgekehrt: hier sind die Transistoren T2 und T3 stromleitend, während die Transistoren T1 und T4 nicht leitend sind.

Durch den DC/DC-Wandler 1 wird die Energie dem gesamten aus den in Reihe geschalteten einzelnen Zellen Zₓ bestehenden Kondensatorstapel, also dem Doppelschichtkondensator DLC, entnommen. Wahlweise oder zusätzlich kann dem System über einen zusätzlichen Schalter SB2 Energie zugeführt werden.

In der ersten Phase fließt ein Strom vom Zwischenkreiskondensator C_{Z} über Transistor T1 und Busleitung 4.1 in die Primärwicklung des Koppeltransformators Trₓ und zurück über die Busleitung 4.2 und Transistor T4 zum Zwischenkreiskondensator C_{Z}.

In der zweiten Phase fließt ein Strom vom Zwischenkreiskondensator C_{Z} über Transistor T3 und Busleitung 4.2 in die Primärwicklung des Koppeltransformators Trₓ (jetzt in Gegenrichtung) und zurück über die Busleitung 4.1 und Transistor T2 zum Zwischenkreiskondensator C_{Z}.

Durch die Ansteuerung der Primärwicklungen steigt die Spannung an den Sekundärwicklungen aller Koppeltransformatoren Tr₁ bis Trₙ, bei denen die sekundärseitigen Auswahlschalter Sₓₐ und S_{xb} geschlossen sind, solange, bis sie der Zellenspannung der am wenigsten geladenen Zelle Zₓ plus zwei Diodenspannungen aus der Gruppe der über die Auswahlschalter ausgewählten Zellen Z entspricht.

Diese Spannung bewirkt in der ersten Phase einen Stromfluss vom ersten Anschluss der Sekundärwicklung durch den Auswahlschalter Sₓₐ, die Diode Dₓₐ, die am wenigsten geladene Zelle Zₓ und die Diode D_{xd} zurück über den Auswahlschalter S_{xb} zum zweiten Anschluss der Sekundärwicklung, wodurch die Zelle Zₓ geladen wird.

In der zweiten Phase bewirkt die nun umgekehrte Spannung gleicher Größe an der Sekundärwicklung des Koppeltransformators Trₓ einen Stromfluss vom zweiten Anschluss der Sekundärwicklung durch den Auswahlschalter S_{xb}, die Diode D_{xc}, die Zelle Zₓ und die Diode D_{xb} über den Auswahlschalter Sₓₐ zurück zum ersten Anschluss der Sekundärwicklung, wodurch die Zelle Zₓ ebenfalls geladen wird.

Dadurch wird eine sehr effiziente Nachladung der über die Auswahlschalter Sₓₐ und S_{xb} ausgewählten Zelle Zₓ oder der am stärksten entladenen Zelle Zₓ - falls eine Gruppe von Zellen ausgewählt wird - erreicht.

Diese Zelle wird solange geladen, bis die Auswahlschalter Sₓₐ und/ oder S_{xb} geöffnet werden oder die Zellenspannung der Zelle Zₓ die nächsthöhere Zellenspannung einer weiteren ausgewählten Zelle erreicht. Der pulsierende Gleichstrom fließt dann durch diese beiden Zellen u.s.w., bis alle Zellen die gleiche Zellenspannung aufweisen.

Die Auswahlschalter S₁ₐ bis S₁ₙ und S_{1b}, bis S₁ₙ sind in Figur 5 schematisch dargestellt, bei diesen Auswahlschaltern kann es sich um jegliche Art von Leistungsschaltern handeln, wie beispielsweise MOSFET-Transitoren, IGBTs usw. Diese Auswahlschalter S₁ₐ bis S₁ₙ und S_{1b} bis S₁ₙ werden in diesem Ausführungsbeispiel durch eine hier nicht dargestellte Ansteuereinheit 5 angesteuert (vgl. hierzu Fig. 6').

Figur 6 zeigt ein weiteres Ausführungsbeispiel der erfindungsgemäßen Schaltungsanordnung mit einer Vollbrücke und einem (Graetz-)Gleichrichter in einer Zweiphasen-Variante. Auch hier sei die Zelle Zₓ diejenige mit der niedrigsten Zellenspannung U_{Zx}. In diesem Ausführungsbeispiel ist das Koppelelement als Koppelkondensator C_{K} ausgeführt.

Funktionsidentische Teile tragen hier die gleichen Bezugszeichen wie in Figur 5.

Die Schaltung des Ausführungsbeispiels mit zwei Phasen arbeitet ähnlich wie die Schaltung des zuvor beschriebenen und in Figur 5 dargestellten Ausführungsbeispiels mit einer Halbbrücke und einer Phase. Es ergeben sich hier aber gewisse Vorteile, die dem Mehraufwand gegengerechnet werden müssen.

Das Ausführungsbeispiel nach Figur 6 weist als DC/AC-Spannungswandler 2 eine Vollbrückenschaltung mit zwei Halbbrücken auf, bestehend aus erstem und zweitem Transistor T1-T2 bzw. drittem und viertem Transistor T3-T4, die mit je einer Bus-Leitung 4.1, 4.2 verbunden sind. Jede Busleitung wird über die ihr zugeordnete Halbbrücke mit Energie versorgt.

Die Busleitung 4.1 ist über jeweils einen Auswahlschalter S₁ₐ bis S₁ₙ, jeweils einen Koppelkondensator C_{K1a}, bis C_{Kna}, und eine Gleichrichterschaltung aus jeweils zwei Dioden D₁ₐ, D_{1b} bis Dₙₐ, D_{nb} mit den in Reihe geschalteten Zellen Z₁ bis Zₙ verbunden.

Die Busleitung 4.2 ist über jeweils einen Auswahlschalter S₁ₐ bis S₁ₙ, jeweils einen Koppelkondensator C_{K1b} bis C_{Knb} und eine Gleichrichterschaltung 3 aus jeweils zwei Dioden D_{1c}, D_{1d} bis D_{nc}, D_{nd} mit den in Reihe geschalteten Zellen Z₁ bis Zₙ verbunden.

Beispielhaft für die Zelle Zₓ bedeutet dies: die mit der Halbbrücke T1-T2 verbundene Busleitung 4.1 ist über den Auswahlschalter Sₓₐ, den Koppelkondensator C_{Kxa} einerseits über die zur Zelle hin stromleitende Diode Dₓₐ mit dem positiven Anschluss der Zelle Zₓ verbunden und andererseits über die zum Koppelkondensator hin stromleitende Diode D_{xb} mit dem negativen Anschluss der Zelle Zₓ verbunden.

Zusätzlich ist die mit der Halbbrücke T3-T4 verbundene Bus-leitung 4.2 über den Auswahlschalter S_{xb}, den Koppelkondensator C_{Kxb} einerseits über die zur Zelle hin stromleitende Diode D_{xc} mit dem positiven Anschluss der Zelle Zₓ verbunden und andererseits über die zum Koppelkondensator hin stromleitende Diode D_{xd} mit dem negativen Anschluss der Zelle Zₓ verbunden.

Die beiden Gleichrichter Dₓₐ, D_{xb} und D_{xc}, D_{xd} arbeiten also parallel auf die Zelle Zₓ. Ebenso sieht die Schaltung für alle anderen Zellen Z₁ bis Zₓ₋₁ und Zₓ₊₁ bis Zₙ aus.

Wesentlicher Vorteil bei zwei Phasen ist hierbei, dass der Wechselstrom durch die eigentlich unbeteiligten Zellen, die momentan nicht geladen werden, also alle Zellen, deren positiver Anschluss ein gegen Bezugspotential GND geringeres Potential, aber höhere Zellenspannungen U_{Z} als die Zelle Zₓ aufweisen (hier also durch die Zellen Zₓ₊₁ bis Zₙ), entfällt.

Durch die Auswahlschalter kann S₁ₐ bis Sₙₐ und S_{1b} bis S_{nb} kann nur eine einzelne Zelle Zₓ oder auch eine Gruppe von Zellen Z geladen werden.

In diesem Ausführungsbeispiel arbeiten die beiden Halbbrücken gegenphasig, d.h., wenn die Transistoren T1 und T4 in der ersten Phase stromleitend sind, sind die Transistoren T2 und T3 nichtleitend; in der zweiten Phase ist es umgekehrt: hier sind die Transistoren T2 und T3 stromleitend, während die Transistoren T1 und T4 nichtleitend sind.

In der ersten Phase fließt ein Strom vom Zwischenkreiskondensator C_{Z} über Transistor T1 in den Bus 4.1, über Auswahlschalter S₁ₐ, Koppelkondensator C_{Kxa} und Diode Dₓₐ durch die Zelle Zₓ und zurück über Diode D_{xd}, Koppelkondensator C_{Kxb}, Auswahlschalter S_{1b}, den Bus 4.2 und Transistor T4 zum Zwischenkreiskondensator CZ.

In der zweiten Phase fließt ein Strom vom Zwischenkreiskondensator C_{Z} über Transistor T3 in den Bus 4.2, über Auswahlschalter S_{1b}, Koppelkondensator C_{Kxb} und Diode D_{xc} durch die Zelle Zₓ und zurück über Diode D_{xb}, Koppelkondensator C_{Kxa}, Auswahlschalter S₁ₐ, den Bus 4.1 und Transistor T₂ zum Zwischenkreiskondensator C_{Z}.

Es kompensieren sich der Nachladestrom des einen Koppelkondensators C_{Kxa} und der Entladestrom des anderen Koppelkondensators C_{Kxb}.

Durch den Tiefsetzsteller 1 wird die Energie dem gesamten aus den in Reihe geschalteten einzelnen Zellen Z bestehenden Kondensatorstapel, also dem Doppelschichtkondensator DLC, entnommen. Wahlweise kann dem System über einen zusätzlichen Schalter SB2 Energie zugeführt werden.

Die Spannung am jeweiligen AC-Bus steigt soweit, bis sie der niedrigsten Zellenspannung plus zwei Diodenspannungen entspricht. Dadurch wird eine sehr effiziente Nachladung der über die Auswahlschalter S₁ₐ bis Sₙₐ und S_{1b} bis S_{nb} ausgewählten Zelle oder der am stärksten entladenen Zelle in einer durch die Auswahlschalter S₁ₐ bis Sₙₐ und S_{1b} bis S_{nb} ausgewählten Gruppe erreicht.

Die Gesamtschaltung benötigt keine komplexen, teuren Einzelbauteile.

Durch die Struktur des AC-Busses 4.1 und 4.2 ist das System leicht erweiterbar. Zusätzliche Energiespeicher Zₙ₊₁ können einfach an den Bus angeschlossen oder überflüssige entfernt werden.

Über eine Ansteuereinheit 5 werden die Gate-Anschlüsse der Auswahlschalter S₁ₐ bis Sₙₐ und S_{1b} bis S_{nb} angesteuert. Die Ansteuerung kann beispielsweise über einen in Fig. 6' dargestellten Gate-Treiber erfolgen.

Bei der Ansteuereeinheit 5 wird die Basis eines Transistors T₅ über einen Widerstand R₁ mit einer Steuerspannung U_{C} beaufschlagt. Der Transistor T₅ ist hier ein npn-BipolarTransistor.

Ein weiterer Widerstand R₂ verbindet die Basis mit dem Emitter des Transistors T₅. Die Basis ist weiter mit Masse GND verbunden. Der Kollektor des Transitor T₅ ist über einen Widerstand R₃ mit einer Spannungsquelle, die eine Spannung U_{H}, beispielsweise 15 V, aufweist verbunden. Der Emitter ist weiter über jeweils einen Widerstand R₄ bzw. R₅ mit dem jeweiligen Gate der Auswahlschalter Sₓₐ bzw. S_{xb} verbunden. Wird die Basis des Transistors T₅ angesteuert, so wird dieser leitend geschaltet und die Auswahlschalter Sₓₐ und S_{xb} werden angesteuert und dadurch ebenfalls leitend geschaltet. Jede Zelle Z oder - falls Gruppen von Zellen ausgewählt werden sollen - jede dieser Gruppen weist eine Ansteuereinheit 5 auf.

Die Figuren 7 a) bis i) zeigen verschiedene Ausführungsbeispiele einer Ladungsausgleichschaltung, bei denen die Anordnung der Auswahlschalter Sₙ variiert werden.

Funktionsidentische Teile tragen hier die gleichen Bezugszeichen wie in Figur 6.

Auch können alle Dioden Dₙ oder ein Teil der Dioden Dₙ mit Hilfe der Drain-Source-Dioden der MOSFET-Auswahlschalter Sₙₐ bis S_{nd} realisiert werden (vgl. Fig. 7 e) bis i)).

Mit Hilfe der der hier beschriebenen Ladungsausgleichsschaltungen kann folgendes Verfahren durchgeführt werden:
- Messen der Zellspannungen U_{Z} der einzelnen Zellen Z,
- Ansteuern der Auswahlschalter Sₓₐ, S_{xb} der Zelle Zₓ, die die kleinste Zellspannung aufweist,
- Aufladen dieser Zelle bis zu einem vorgegebenen oder aufgrund von Betriebsparametern ermittelten Spannungsschwellwerts, insbesondere 2,5 V.

Die Messung der Zellspannung kann beispielsweise mit Hilfe des in DE 103 47 110 B3 beschriebenen Verfahrens erfolgen. Der Inhalt der DE 103 47 110 B3 wird hiermit vollumfänglich in diese Anmeldung eingeschlossen.

Die Trennschärfe bei dem Ladungsausgleich mehrerer selektierter Zellen Z wird unter anderem durch die Koppelkondensatoren C_{K} oder durch die Koppeltransformatoren Tr bestimmt. Da hier jedoch nur ausgewählte Zellen geladen werden, wird hier die effektive Trennschärfe nur durch die Genauigkeit der Zellspannungsmessung festgelegt.

Tritt bei einer Zelle Z ein Kurzschluss auf, so würde diese bei einer Ladungsausgleichschaltung ohne eine Auswahlmöglichkeit den gesamten Ladestrom aufnehmen, da sie die geringste Spannung aufweist. Hier kann diese Zelle Z jedoch über den Auswahlschalter S vom AC-Bus getrennt werden. Im Anschluss daran kann Ladung der übrigen Zellen Z ausgeglichen werden.

Auch kann die Ladungsausgleichschaltung durch die Auswahl einer geeigneten Anordnung und Ausgestaltung der Auswahlschalter (vgl. Fig. 7) gegen Verpolung geschützt werden.

Weiter können in Abhängigkeit von der Gesamtspannung U_{DLC} des Doppelschichtkondensators DLC Zellen Z aufgrund ihrer Betriebsparameter, insbesondere ihrer Kapazität, vom Ladungsausgleich ausgenommen werden.

Darüber hinaus können Zellen Z, die einen erhöhten Leckstrom aufweisen, durch ein Trennen vom AC-Bus vom Ladungsausgleich ausgenommen werden. So kann der Gesamtenergieverbrauch der Anordnung reduziert werden. Falls aufgrund der Zellspannung U_{Zx} bei einer späteren Entladung des Doppelschichtkondensators die Gefahr einer Umpolung der Zelle Zₓ besteht, so kann diese Zelle Zₓ durch eine gesteuerte Auswahl bis zu einer vorbestimmten Mindestspannung aufgeladen werden.

Die Reduktion des Gesamtenergieverbrauchs und das erhalten einer Mindestspannung ist besonders bei längeren Standzeiten von Vorteil.

Die Ladungsausgleichschaltung kann auch zum Ladungsausgleich von anderen Energiespeichern, beispielsweise von in Reihe geschalteten Akkumulatoren, verwendet werden.

Diese Schaltungsanordnungen (DLC, Gleichrichterdioden, Koppelkondensatoren, Auswahlschalter und Busleitung/en können sowohl in Gehäuse integriert werden, welche die einzelnen Zellen umgeben, oder in ein gemeinsames Gehäuse. Auf diese Weise kann eine kompakte Einheit aufgebaut werden, die lediglich drei oder vier Anschlüsse aufweist.

Alternativ kann auch eine Schaltungsanordnung gemäß Fig. 3 mit Auswahlschaltern versehen werden, sodass auch dort einzelne Zellen des Doppelschichtkondensators DLC vom Ladungsausgleich ausgenommen werden können.

## Patentansprüche

1. Vorrichtung zum Ladungsausgleich von in Reihe angeordneten einzelnen Zellen (Z₁ bis Zₙ) eines Energiespeichers (DLC),
wobei ein DC/DC-Wandler (1) vorgesehen ist, dessen Eingang über einen ersten Schalter (SB1) mit dem positiven Anschluss des Energiespeichers (DLC) verbunden ist,
dass ein mit dem Ausgang des DC/DC-Wandler (1) verbundener DC/AC-Wandler (2) vorgesehen ist, welcher einen Zwischenkreiskondensator (C_{Z}) und eine Brückenschaltung (T1 bis T4) enthält,
dass zwei dem DC/AC-Wandler (2) nachgeschaltete AC-Busleitungen (4.1, 4.2) vorgesehen sind, und
dass zwischen jeder Zelle (Z₁ bis Zₙ) und jeder AC-Busleitung (4.1, 4.2) eine Reihenschaltung eines Koppelkondensators (C_{K1a} und C_{K1b} bis C_{Kna} und C_{Knb}) und eines Gleichrichters (3) angeordnet ist,
dass der Gleichrichter (3) so ausgebildet ist, dass eine Diode (Dₓₐ, D_{xc}, wobei x = 1 bis n) von dem von der AC-Busleitung (4.1) abgewandten Anschluss des Koppelkondensators (C_{Kxa}) zum positiven Anschluss der zugeordneten Zelle (Zₓ) hin stromleitend ist, und die andere Diode (D_{xb}, D_{xd}) vom negativen Anschluss der Zelle (Zₓ) zu dem von der AC-Busleitung (4.2) abgewandten Anschluss des zugeordneten Koppelkondensators (C_{Kxb}) hin stromleitend ist und
dass zwischen den AC-Busleitungen (4.1, 4.2) und jeder der Zellen (Z₁ bis Zₙ) zumindest ein Auswahlschalter (Sₓₐ, S_{xb}, wobei x = 1 bis n) angeordnet ist, wodurch die Zellen (Z₁ bis Zₙ) mit den AC-Busleitungen (4.1, 4.2) elektrisch verbunden oder elektrisch von diesen getrennt werden können.

2. Vorrichtung nach Anspruch 1, **dadurch gekennzeichnet, dass** der DC/DC-Wandler (1) über einen zweiten Schalter (SB2) mit einer weiteren Energiequelle (B) verbindbar ist.

3. Vorrichtung nach Anspruch 1, **dadurch gekennzeichnet, dass** der DC/DC-Wandler (1) ein stromgeregelter Tiefsetzsteller ist.

4. Vorrichtung nach Anspruch 1, **dadurch gekennzeichnet, dass** die Brückenschaltung des DC/AC-Wandlers (2) mehrphasig ausgebildet ist, wobei jede Phase als Halbbrücke aus zwei in Reihe liegenden Transistoren (T1-T2, T3-T4) besteht, die parallel zum Zwischenkreiskondensator (C_{Z}) angeordnet ist.

5. Vorrichtung nach Anspruch 1, **dadurch gekennzeichnet, dass** der Energiespeicher (DLC) ein Doppelschichtkondensator ist.

6. Vorrichtung nach Anspruch 1, **dadurch gekennzeichnet, dass** der Energiespeicher (DLC) aus einer Reihenschaltung von Akkumulatoren besteht.

7. Vorrichtung nach Anspruch 4, **dadurch gekennzeichnet, dass** die Brückenschaltung des DC/AC-Wandlers (2) selbstgetaktet ist.

8. Vorrichtung nach Anspruch 1, **dadurch gekennzeichnet, dass** Energiespeicher (DLC), Gleichrichter (3), Koppelelemente (CK1 bis CKn, CK1a bis CKnb) und AC-Busleitungen (4.1, 4.2) in einem gemeinsamen Gehäuse integriert sind.

9. Verfahren zum Betreiben der Vorrichtung nach Anspruch 1, **dadurch gekennzeichnet,**
**dass** der vom Energiespeicher (DLC) oder der weiteren Energiequelle (B) gespeiste DC/DC-Wandler (1) dem Zwischenkreiskondensator (C_{Z}) einen Strom zuführt, wodurch sich an diesem eine Spannung (U_{CZ}) zum Laden der Zellen (Z₁ bis Zₙ) selbständig einstellt, und
**dass** der DC/AC-Wandler (2) diese Spannung (U_{CZ}) wechselrichtet und über die AC-Busleitungen (4.1, 4.2), die Koppelkondensatoren (CK1 bis CKn, CK1a bis CKnb) und Dioden (D₁ₐ bis D_{nd}) des Gleichrichters (3) einen gleichgerichteten, pulsierenden Ladestrom zuführt, und
**dass** die zu ladende Zelle (Zx) oder eine Gruppe von Zellen (Zx) über zumindest einen Auswahlschalter (Sₓₐ, S_{xb}, wobei x = 1 bis n) ausgewählt wird.

10. Verfahren nach Anspruch 9, **dadurch gekennzeichnet, dass** bei einem mehrphasigen DC/AC-Wandler (2) der Ladestrom für die Zelle (Zₓ, mit x = 1 bis n) mit der geringsten Zellenspannung (U_{Zx})
in der ersten Phase vom Zwischenkreiskondensator (C_{Z}) über den ersten Transistor (T1), den ersten AC-Bus (4.1), einen ersten Auswahlschalter (S₁ₐ), Koppelelement (C_{Kxa}) und Diode (Dₓₐ), durch die Zelle (Zₓ) und zurück über Diode (D_{xd}), Koppelelement (C_{Kxb}), einen zweiten Auswahlschalter (S_{1b}), den zweiten AC-Bus (4.2) und den vierten Transistor (T4) zum Zwischenkreiskondensator (C_{Z}) fließt, und
in der zweiten Phase vom Zwischenkreiskondensator (C_{Z}) über den dritten Transistor (T3), den AC-Bus (4.2), den zweiten Auswahlschalter (S_{1b}), Koppelelement (C_{Kxb}) und Diode (D_{xc}), durch die Zelle (Zₓ) und zurück über Diode (D_{xb}), Koppelelement (C_{Kxa}), den ersten Auswahlschalter (S₁ₐ), den AC-Bus (4.1) und den zweiten Transistor (T2) zum Zwischenkreiskondensator (C_{Z}) fließt.

## Claims

1. Device for charge equalisation of series-connected individual cells (Z₁ to Zₙ) of an energy accumulator (DLC), wherein a DC/DC converter (1) is provided, the input of which is connected via a first switch (SB1) to the positive connection of the energy accumulator (DLC),
a DC/AC converter (2) connected to the output of the DC/DC converter (1) is provided comprising an intermediate circuit capacitor (C_{z}) and a bridge circuit (T1 to T4),
two AC bus lines (4.1, 4.2) connected downstream of the DC/AC converter (2) are provided, and
a series connection of a coupling capacitor (C_{K1a} and C_{K1b} to C_{Kna} and C_{Knb}) and a rectifier (3) is arranged between each cell (Z₁ to Zₙ) and each AC bus line (4.1, 4.2),
the rectifier (3) is designed so that a diode (Dₓₐ, D_{xc}, where x = 1 to n) is conductive from the connection of the coupling capacitor (C_{Kxa}) facing away from the AC bus line (4.1) to the positive connection of the assigned cell (Zₓ), and the other diode (D_{xb}, D_{xd}) is conductive from the negative connection of the cell (Zₓ) to the connection of the assigned coupling capacitor (C_{Kxb}) facing away from the AC bus line (4.2) and
at least one selector switch (Sₓₐ, S_{xb}, where x=1 to n) is arranged between the AC bus lines (4.1, 4.2) and each of the cells (Z₁ to Zₙ), whereby the cells (Z₁ to Zₙ) can be electrically coupled to the AC bus lines (4.1, 4.2) or electrically disconnected therefrom.

2. Device according to claim 1, **characterised in that** the DC/DC converter (1) may be connected to a further power source (B) via a second switch (SB2).

3. Device according to claim 1, **characterised in that** the DC/DC converter (1) is a current-regulated voltage reduction unit.

4. Device according to claim 1, **characterised in that** the bridge circuit of the DC/AC converter (2) has a multi-phase design, wherein each phase is embodied as a half-bridge comprising two series transistors (T1-T2, T3-T4) arranged parallel to the intermediate circuit capacitor (C_{z}).

5. Device according to claim 1, **characterised in that** the energy accumulator (DLC) is a double-layer capacitor.

6. Device according to claim 1, **characterised in that** the energy accumulator (DLC) comprises a series connection of accumulators.

7. Device according to claim 4, **characterised in that** the bridge circuit of the DC/AC converter (2) is self-clocked.

8. Device according to claim 1, **characterised in that** the energy accumulator (DLC), rectifier (3), coupling elements (CK1 to CKn, CKla to CKnb) and AC bus lines (4.1, 4.2) are integrated in a common housing.

9. Method for operating the device according to claim 1, **characterised in that**
the DC/DC converter (1) supplied by the energy accumulator (DLC) or the further power source (B) supplies a current to the intermediate circuit capacitor (C_{z}), whereby a voltage (U_{CZ}) is automatically established there to charge the cells (Z₁ to Zₙ), and
**in that** the DC/AC converter (2) inverts this voltage (U_{CZ}) and supplies an inverted, pulsating charging current via the AC bus lines (4.1, 4.2), the coupling capacitors (CK1 to CKn, CKla to CKnb) and diodes (Dₗₐ to D_{nd}) of the rectifier (3) and
**in that** the cell to be charged (Zx) or a group of cells (Zx) is selected via at least one selector switch (Sₓₐ, S_{xb}, where x = 1 to n).

10. Method according to claim 9, **characterised in that** with a multi-phase DC/AC converter (2), the charging current for the cell (Z_{X}, where x = 1 to n) with the lowest cell voltage (U_{zx})
flows in the first phase from the intermediate circuit capacitor (C_{z}) via the first transistor (T1), the first AC bus (4.1), a first selector switch (S₁ₐ), coupling element (C_{Kxa}) and diode (Dₓₐ), through the cell (Zₓ) and back via a diode (D_{xd}), coupling element (C_{Kxb}), a second selector switch (S_{1b}), the second AC bus (4.2) and the fourth transistor (T4) to the intermediate circuit capacitor (C_{z}) and
flows in the second phase from the intermediate circuit capacitor (C_{z}) via the third transistor (T3), the AC bus (4.2), the second selector switch (S_{1b}), the coupling element (C_{KXb}) and the diode (D_{xc}), through the cell (Z_{X}) and back via the diode (D_{xb}), coupling element (C_{Kxa}), the first selector switch (S₁ₐ), the AC bus (4.1) and the second transistor (T2) to the intermediate circuit capacitor (C_{z}).

## Revendications

1. Dispositif d'équilibrage de charge d'éléments individuels (Z₁ à Zₙ) agencés en série d'un accumulateur d'énergie (DLC),
dans lequel
il est prévu un convertisseur CC/CC (1), dont l'entrée est reliée via un premier commutateur (SB1) à la borne positive de l'accumulateur d'énergie (DLC),
il est prévu un convertisseur CC/CA (2) relié à la sortie du convertisseur CC/CC (1) et qui contient un condensateur de circuit intermédiaire (C_{Z}) et un circuit à pont (T1 à T4),
il est prévu deux lignes de bus CA (4.1, 4.2) montées en aval du convertisseur CC/CA (2), et
un montage en série d'un condensateur de liaison (C_{K1a} et C_{K1b} à C_{Kna} et C_{Knb}) et d'un redresseur (3) est agencé entre chaque élément (Z1 à Zn) et chaque ligne de bus CA (4.1, 4.2),
le redresseur (3) est conçu de sorte qu'une diode (Dₓₐ, D_{xc}, où x = 1 à n) conduise le courant de la borne opposée à la ligne de bus CA (4.1) du condensateur de liaison (C_{Kxa}) à la borne positive de l'élément correspondant (Zₓ) et que l'autre diode (D_{xb}, D_{xd}) conduise le courant de la borne négative de l'élément (Zₓ) à la borne opposée à la ligne de bus CA (4.2) du condensateur de liaison (C_{Kxb}) correspondant et,
entre les lignes de bus CA (4.1, 4.2) et chaque élément (Z₁ à Zₙ), il est agencé au moins un interrupteur de sélection (Sₓₐ, S_{xb}, où x = 1 à n), par le biais duquel les éléments (Z₁ à *Zₙ*) peuvent être électriquement reliés aux lignes de bus CA (4.1, 4.2) ou en être électriquement séparés.

2. Dispositif selon la revendication 1, **caractérisé en ce que** le convertisseur CC/CC (1) peut être relié via un second commutateur (SB2) à une autre source d'énergie (B).

3. Dispositif selon la revendication 1, **caractérisé en ce que** le convertisseur CC/CC (1) est un convertisseur abaisseur au courant réglé.

4. Dispositif selon la revendication 1, **caractérisé en ce que** le circuit à pont du convertisseur CC/CA (2) est polyphasé, chaque phase étant constituée en demi-pont de deux transistors (T1-T2, T3-T4) montés en série, qui sont agencés en parallèle au condensateur de circuit intermédiaire (C_{Z}).

5. Dispositif selon la revendication 1, caractérisé ence que l'accumulateur d'énergie (DLC) est un condensateur à double couche.

6. Dispositif selon la revendication 1, **caractérisé en ce que** l'accumulateur d'énergie (DLC) est constitué d'un montage en série d'accumulateurs.

7. Dispositif selon la revendication 4, **caractérisé en ce que** le circuit à pont du convertisseur CC/CA (2) est auto-cadencé.

8. Dispositif selon la revendication 1, **caractérisé en ce que** accumulateurs d'énergie (DLC), redresseurs (3), éléments de liaison (CK1 à CKn, CK1a à CKnb) et lignes de bus CA (4.1, 4.2) sont intégrés à un boîtier commun.

9. Procédé d'exploitation du dispositif selon la revendication 1, **caractérisé en ce que**
le convertisseur CC/CC (1) alimenté par l'accumulateur d'énergie (DLC) ou l'autre source d'énergie (B) achemine un courant au condensateur de circuit intermédiaire (C_{Z}), moyennant quoi une tension (U_{CZ}) s'établit de façon autonome sur celui-ci pour le chargement des éléments (Z₁ à Zn), et
le convertisseur CC/CA (2) ondule cette tension (U_{CZ}) et achemine un courant de charge pulsatoire redressé, via les lignes de bus CA (4.1, 4.2), les condensateurs de liaison (CK1 à CKn, CK1a à CKnb) et les diodes (D₁ₐ à D_{nd}) du redresseur (3), et
l'élément à charger (Zx) ou un groupe d'éléments (Zx) est choisi via au moins un interrupteur de sélection (Sₓₐ, S_{xb}, où x = 1 à n).

10. Procédé selon la revendication 9, **caractérisé en ce que**, dans le cas d'un convertisseur CC/CA (2) polyphasé, le courant de charge pour l'élément (Zₓ, avec x = 1 à n) avec la tension d'élément la plus faible (U_{Zx})
circule, dans la première phase, du condensateur de circuit intermédiaire (C_{Z}), via le premier transistor (T1), le premier bus CA (4.1), un premier interrupteur de sélection (S₁ₐ), un élément de liaison (C_{Kxa}) et une diode (Dₓₐ), à travers l'élément (Zₓ) et revient, via la diode (D_{xd}), l'élément de liaison (C_{Kxb}), un second interrupteur de sélection (S_{1b}), le second bus CA (4.2) et le quatrième transistor (T4), jusqu'au condensateur de circuit intermédiaire (C_{Z}), et
circule, dans la seconde phase, du condensateur de circuit intermédiaire (C_{Z}), via le troisième transistor (T3), le bus CA (4.2), le second interrupteur de sélection (S_{1b}), l'élément de liaison (C_{Kxb}) et la diode (D_{xc}), à travers l'élément (Zₓ) et revient, via la diode (D_{xb}), l'élément de liaison (C_{Kxa}), le premier interrupteur de sélection (S₁ₐ), le bus CA (4.1) et le second transistor (T2), jusqu'au condensateur de circuit intermédiaire (C_{Z}).
